(19) Europäisches Patentamt
European Patent Office
Office européen des brevets

(11) **EP 1 465 761 B1**

(12) **EUROPÄISCHE PATENTSCHRIFT**

(45) Veröffentlichungstag und Bekanntmachung des Hinweises auf die Patenterteilung:
**12.01.2011 Patentblatt 2011/02**

(21) Anmeldenummer: **02792736.7**

(22) Anmeldetag: **06.11.2002**

(51) Int Cl.:
**B29C 45/76** (2006.01)     **B29C 45/50** (2006.01)

(86) Internationale Anmeldenummer:
**PCT/EP2002/012391**

(87) Internationale Veröffentlichungsnummer:
**WO 2003/039839 (15.05.2003 Gazette 2003/20)**

(54) **VERFAHREN ZUM REGELN DES DOSIERVORGANGS EINER SPRITZGIESSMASCHINE**

METHOD FOR REGULATING THE DOSING PROCESS OF AN INJECTION MOULDING MACHINE

PROCEDE POUR REGULER LE PROCESSUS DE DOSAGE D'UNE MACHINE DE MOULAGE PAR INJECTION

(84) Benannte Vertragsstaaten:
**AT BE BG CH CY CZ DE DK EE ES FI FR GB GR IE IT LI LU MC NL PT SE SK TR**

(30) Priorität: **07.11.2001 DE 10154615**

(43) Veröffentlichungstag der Anmeldung:
**13.10.2004 Patentblatt 2004/42**

(73) Patentinhaber: **KraussMaffei Technologies GmbH 80997 München (DE)**

(72) Erfinder:
• **GRIMM, Günter**
 **86567 Hilgertshausen (DE)**
• **HAAG, Herbert**
 **85221 Dachau (DE)**
• **ZÜFLE, Michael**
 **85259 Wiedenzhausen (DE)**

(74) Vertreter: **Wilhelm, Ludwig et al KraussMaffei AG Krauss-Maffei-Strasse 2 80997 München (DE)**

(56) Entgegenhaltungen:
**EP-A- 1 063 073     EP-A- 1 207 032**

• **PATENT ABSTRACTS OF JAPAN vol. 012, no. 332 (M-738), 8. September 1988 (1988-09-08) & JP 63 095927 A (SUMITOMO HEAVY IND LTD), 26. April 1988 (1988-04-26)**
• **PATENT ABSTRACTS OF JAPAN vol. 016, no. 169 (M-1239), 23. April 1992 (1992-04-23) & JP 04 014424 A (MITSUBISHI HEAVY IND LTD), 20. Januar 1992 (1992-01-20)**
• **PATENT ABSTRACTS OF JAPAN vol. 010, no. 311 (M-528), 23. Oktober 1986 (1986-10-23) & JP 61 121921 A (JAPAN STEEL WORKS LTD:THE), 9. Juni 1986 (1986-06-09)**
• **PATENT ABSTRACTS OF JAPAN vol. 2000, no. 04, 31. August 2000 (2000-08-31) & JP 2000 015675 A (TEIJIN LTD), 18. Januar 2000 (2000-01-18)**
• **PATENT ABSTRACTS OF JAPAN vol. 013, no. 025 (M-787), 20. Januar 1989 (1989-01-20) & JP 63 236618 A (MEIKI CO LTD), 3. Oktober 1988 (1988-10-03)**
• **PATENT ABSTRACTS OF JAPAN vol. 010, no. 360 (M-541), 3. Dezember 1986 (1986-12-03) & JP 61 158417 A (MEIKI CO LTD), 18. Juli 1986 (1986-07-18)**

**Beschreibung**

Die Erfindung bezieht sich auf ein Verfahren zum Regeln des Dosiervorgangs einer Spritzgießmaschine gemäß dem Oberbegriff des Patentanspruchs 1.

Bekannte Spritzgießprozesse unterteilt man grob in eine Dosierphase und in eine Einspritzphase. In der Dosierphase wird in eine Schnecke zu plastifizierendes Material zugeführt und durch Drehung der Schnecke in einem Spritzzylinder plastifiziert und in einen Dosierraum transportiert. Dabei bewegt sich die Schnecke entsprechend dem zugeführten Material vom Dosierraum weg und vergrößert diesen, bis die Schnecke schließlich eine Dosierposition (Schneckenendposition) erreicht, bei der sich eine vorgegebene Materialmenge im Dosierraum befindet. In der anschließenden Einspritzphase wird das plastifizierte Material durch eine lineare Bewegung der Schnecke aus dem Dosierraum über Kanäle in ein Werkzeug (Form) eingespritzt.

In der Dosierphase ist es erforderlich, daß die Schnecke möglichst exakt die Dosierposition oder Schneckenendstellung anläuft. Überläuft die Schnecke die Dosierposition, so sammelt sich übermäßig viel Material im Dosierraum, was bei der anschließenden Einspritzphase zu einer übermäßigen Zufuhr von Material und damit zu übermäßiger Gratbildung am zu fertigenden Werkzeug führt; erreicht die Schnecke die Dosierposition nicht, befindet sich zu wenig Material im Dosierraum, was zu Einfallstellen, Lunkern od. dgl. am Werkstück führt.

Bei allen Spritzgießmaschinen zeigt der Antrieb eine gewisse Trägheit, die beim Anfahren der Dosierposition berücksichtigt werden muß; dieser Effekt ist insbesondere bei elektrisch betriebenen Maschinen kritisch, da deren Antriebsstrang eine hohe Trägheit aufweist.

Aus der JP63095927 ist ein Verfahren zur Regelung des Dosiervorgangs bekannt, bei dem die aktuelle Position der Schnecke und deren aktuelle Rückzugsgeschwindigkeit gemessen werden und mit diesen Werten unter Verwendung einer Formel die Schneckendrehzahl bestimmt wird.

Aus der DE 19619730 A1 ist eine Einspritzeinheit einer Spritzgießmaschine mit einem ersten Antriebsstrang für die Drehbewegung der Schnecke und einem zweiten Antriebsstrang für die Rückbewegung der Schnecke bekannt. Damit können die Drehgeschwindigkeit bzw. Schneckendrehzahl einerseits und die Rückzugsgeschwindigkeit andererseits unabhängig voneinander geregelt werden. Somit kann unabhängig vom Staudruck im Schneckenvorraum direkt das Verhältnis von Dreh- und Rückzugsgeschwindigkeit der Schnecke eingestellt werden.

Ein Verfahren gemäß dem Oberbegriff des Patentanspruchs 1 ist aus der EP 0 245 522 A1 bekannt. Bei diesem Verfahren wird die Drehzahl der Schnecke in der Dosierphase eine vorgegebene Strecke vor der Dosierposition auf einen Minimalwert verändert, so daß beim Anhalten der Schnecke in der Dosierposition nur geringe Trägheitskräfte auftreten.

Dabei ist jedoch zu berücksichtigen, daß die verfahrenstechnischen Gegebenheiten beim Dosieren von Kunststoff nicht immer konstant sind; das gilt insbesondere in Bezug auf das Einzugsverhalten der Schnecke, d. h. in welchem Maße das Material in die Schnecke eingezogen und plastifiziert wird. Dies hat bei den üblichen Verfahren mit einer vorbestimmten Abschaltsequenz den Nachteil, daß der effektive Abschaltpunkt und damit die Schneckenendposition variieren kann.

Demgegenüber liegt der Erfindung die Aufgabe zugrunde, ein Verfahren zum Regeln des Dosiervorgangs einer Spritzgießmaschine anzugeben, bei dem eine Schneckenendstellung (Dosierposition) immer exakt erreicht werden kann.

Die Lösung dieser Aufgabe erfolgt durch ein Verfahren mit den Merkmalen des Patentanspruchs 1; die abhängigen Ansprüche betreffen vorteilhafte Weiterentwicklungen der Erfindung.

Der Erfindung liegt die Erkenntnis zugrunde, daß in der Regel die axiale Rückzugsgeschwindigkeit und die dazu erforderliche Drehzahl der Schnecke nicht linear voneinander abhängen. Das Verhältnis von axialer Rückzugsgeschwindigkeit der Schnecke und der dazu erforderlichen Drehzahl gibt so- mit das Fördervermögen der Schnecke bei dieser Drehzahl an, und in dieses Fördervermögen gehen verschiedene Parameter wie Temperatur des zu verarbeitenden Materials, physikalische Beschaffenheit des zugeführten Materials, Einzugsverhalten der Schnecke, Konsistenz des Materials etc. ein. Diese Parameter können implizit berücksichtigt werden, wenn man zumindest in der Endphase des Dosiervorgangs die Drehzahl der Schnecke abhängig von der aktuellen axialen Geschwindigkeit der Schnecke Vermiudwt. Dies verändert wiederum die aktuelle Rückzugsgeschwindigkeit der Schnecke, die auf diese Weise linear von der Zeit abhängig vermindert werden kann, so daß die Schnecke exakt die Schneckenendstellung bzw. die Dosierposition erreicht.

Vorzugsweise wird das Regelverfahren als iterativer Prozeß durchgeführt, bei dem eine neu einzustellende Drehzahl der Schnecke aus der aktuellen Drehzahl sowie aus dem Verhältnis der aktuellen Drehzahl und der aktuellen axialen Rückzugsgeschwindigkeit der Schnecke ermittelt wird.

Dabei wird vorzugsweise eine Minimaldrehzahl eingestellt, wenn die neu einzustellende Drehzahl unterhalb der Minimaldrehzahl liegt.

Ein Ausführungsbeispiel der Erfindung wird anhand der beigefügten Zeichnungen erläutert. Es zeigt:

Fig. 1    den schematischen Ausbau einer Einspritzeinheit und

Fig. 2    ein Geschwindigkeits-Ortsdiagramm für die Dosier- phase.

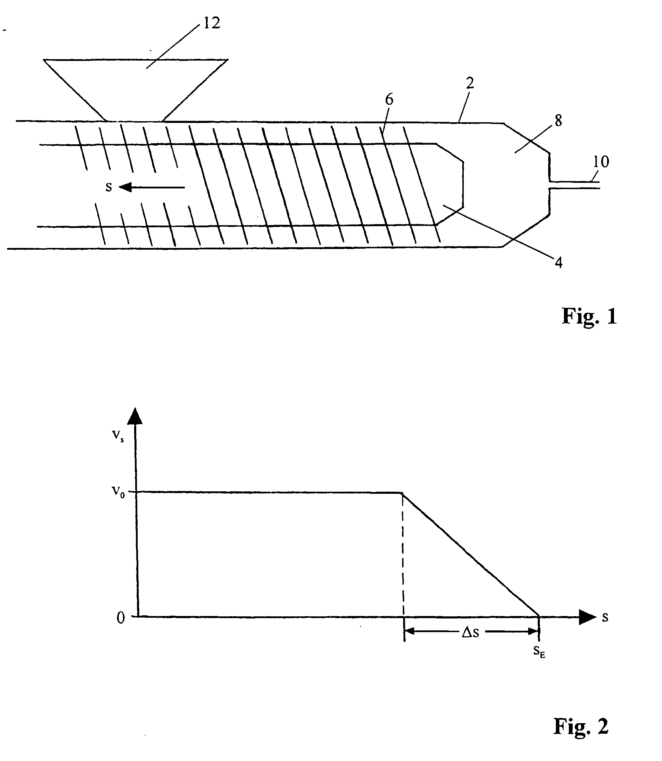

Gemäß der schematischen Darstellung in der Figur 1 umfaßt eine Einspritzeinheit einen Schneckenzylinder 2, in dem eine Schnecke 4 mit mindestens einem Schneckensteg 6 drehbar und axial verschieblich gelagert ist.

Über eine Schütte 12 wird zu plastifizierendes Material in den Schneckenzylinder 2 und damit der Schnecke 4 zugeführt. Das Material wird von der sich drehenden Schnecke 4 mit Schneckensteg 6 ergriffen, plastifiziert und in einen Dosierraum 8 gefördert. Durch das sich im Dosierraum 8 ansammelnde Material baut sich im Dosierraum 8 ein Staudruck auf, der die Schnecke 4 entlang der Strecke s in Richtung des Pfeils axial verschiebt. Der Vorgang wird beendet, wenn die Schnecke eine Schneckenendstellung oder Dosierposition (nicht dargestellt) erreicht hat, in der sich im Dosierraum 8 eine vorgegebene Menge plastifizierten Materials gesammelt hat. Das Material wird anschließend über eine axiale Einspritzbewegung der Schnecke über Kanäle 10 in ein Formwerkzeug (nicht dargestellt) eingespritzt, worauf sich ein neuer Dosiervorgang anschließt.

Nicht in den Zeichnungen dargestellt ist ein Dosiermotor, der die Schnecke rotatorisch antreibt, sowie ein Einspritzmotor, der die Schnecke für eine lineare Axialbewegung zum Einspritzen antreibt. Der generelle Aufbau von Spritzgießeinheiten ist allgemein bekannt und wird deshalb nicht weiter erläutert.

Figur 2 zeigt den Graphen der aktuellen axialen Rückzugsgeschwindigkeit $v_s$, der Schnecke, aufgetragen über dem Schnekkenweg s in der Endphase des Dosiervorgangs. Dabei soll die Geschwindigkeit der Schnecke ausgehend von einer Anfangs-Rückzugsgeschwindigkeit $v_0$ über einen Bremsweg $\Delta s$ linear so vermindert werden, daß die Schnecke exakt in einer Schnekkenendstellung $s_E$ zum Stillstand kommt, d. h. sich nicht mehr axial bewegt.

Zur Ermittlung von $\Delta s$ wird dem Dosierantriebsstrang eine Bremszeit $t_B$ zugeschrieben, und zwar nach der Beziehung

$$(1) \qquad\qquad t_H = \frac{\omega}{\alpha}$$

Dabei ist $\omega$ die Drehzahl der Schnecke zu Beginn des Bremsvorganges, und $\alpha$ ist das Bremsvermögen des Antriebsstrangs, in das die Trägheit des Antriebsstrangs, Einflüsse von Umrichtern etc. einfließen. Werte für $t_B$ bzw. $\alpha$ können in einfacher Weise durch Versuche ermittelt werden, $\omega$ ist bekannt, und $t_B$ kann gemessen werden.

Analog zur rotatorischen Bewegung der Schnecke kann man für die Abbremsung der linearen Axialbewegung eine Beschleunigung $a_s$ definieren, durch

$$(2) \qquad\qquad a_s = \frac{v_0}{t_B}$$

wobei $v_0$ die axiale Rückzugsgeschwindigkeit der Schnecke zu Beginn des Bremsvorgangs ist.

Daraus folgt nach Regeln der klassischen Kinematik für den Bremsweg $\Delta s$:

$$(3) \qquad\qquad \Delta s = \frac{1}{2} \cdot a_s \cdot t_B^2 = \frac{1}{2} v_0 \cdot t_B$$

Durch den so ermittelten Wert von $\Delta s$ wird der vor der Schneckenendposition $s_E$ liegende Abstand angegeben, bei dem der Bremsvorgang einzuleiten ist.

Vorzugsweise wird dabei die axiale Rückzugsgeschwindigkeit $v_s$ der Schnecke in diskreten Schritten oder Takten verändert, wobei für den i-ten Takt gilt:

$$(4) \qquad\qquad v_s(i+1) = v_s(i) - a_s \cdot \Delta t$$

wobei $v_s(i+1)$ ein neuer Geschwindigkeitswert ist, $v_s(i)$ die aktuelle Geschwindigkeit und $\Delta t$ die Taktzeit jedes Schrittes ist.

Das Fördervermögen c, d. h. die Beziehung zwischen $\omega$ und $v_s$ kann für den i-ten Schritt ausgedrückt werden als

$$( 5 ) \qquad c(i) \cdot \omega(i) = v_s(i)$$

Eingesetzt in Gleichung (4) folgt daraus

$$( 6 ) \qquad \omega(i+1) = \frac{c(i)}{c(i+1)} \omega(i) - \frac{a_s}{c(i+1)} \cdot \Delta t$$

Unter der Annahme, daß sich in den relativ kurzen Taktzeiten eines Rechenalgorithmus sich c nicht wesentlich innerhalb eines Taktes ändert, kann $c(i+1)$ ersetzt werden durch $c(i)$, so daß schließlich folgt

$$( 7 ) \qquad \omega(i+1) \leftarrow \omega(i) - \frac{\omega(i)}{v_s(i)} a_s \Delta t$$

Ein neu einzustellender Drehzahlwert für die Drehung der Schnecke wird somit ermittelt aus dem aktuellen Drehzahlwert sowie der aktuellen Rückzugsgeschwindigkeit der Schnecke, wobei durch das Verhältnis $v_s$ zu $\omega$ das aktuelle Fördervermögen der Schnecke berücksichtigt wird.

Sollte das Fördervermögen unter einen Minimalwert fallen, bei dem beispielsweise die Schnecke trotz Drehung nicht fördert, so kann der aktuelle Wert für c durch einen Minimalwert ersetzt werden bzw. kann eine Mindestdrehzahl festgelegt werden, die statt der neu einzustellenden Drehzahl eingestellt wird, wenn die neu einzustellende Drehzahl unter der Mindestdrehzahl liegt.

In welcher Weise das oben dargestellte Verfahren in eine Spritzgießmaschine implementiert wird, ist dem Fachmann geläufig. Dazu muß eine Wegmessung durchgeführt werden, um festzustellen, wann die Schnecke den Abstand $\Delta s$ zu der Schneckenendposition $s_E$ erreicht hat sowie Mittel zur Ermittlung der aktuellen Drehzahl und Rückzugsgeschwindigkeit. Ferner ist eine Steuerelektronik erforderlich mit einem Prozessor zur Durchführung der oben dargestellten Berechnungen sowie entsprechenden Speichern zur Speicherung variabler und fixer Werte wie der taktabhängigen Werte bzw. der Werte $\alpha$, $a_s$, zusammen mit geeigneten Umrichtern, Verstärkern, etc. zur Ansteuerung des Dosiermotors.

**Patentansprüche**

1. Verfahren zum Regeln des Dosiervorgangs einer Spritzgießmaschine, bei der Material von einer rotierenden Schnecke (4) plastifiziert und in einen Dosierraum (8) gefördert wird, wobei sich im Dosierraum (8) ein Staudruck aufbaut, der die Schnecke (4) mit einer axialen Rückzugsgeschwindigkeit ($v_s$) axial auf eine Dosierposition ($s_E$) verschiebt, wobei man die Drehzahl (w) der Schnecke vor Erreichen der Dosierposition ($s_E$) in Abhängigkeit von der axialen Rückzugsgeschwindigkeit ($v_s$) vermindert,
**dadurch gekennzeichnet,**
**dass** man einen neu einzustellenden Drehzahlwert der Schnecke in Abhängigkeit von einem aktuellen Drehzahlwert und einer aktuellen Rückzugsgeschwindigkeit der Schnecke berechnet.

2. Verfahren nach Anspruch 1, **dadurch gekennzeichnet, dass** man iterativ neue Drehzahlwerte $\omega(i+1)$ für die Schnecke (4) aus der folgenden Beziehung ermittelt:

$$\omega(i+1) \leftarrow \omega(i) - \frac{\omega(i)}{v(i)} a_s \Delta t$$

wobei $\omega(i)$ der aktuelle Drehzahlwert im i-ten Schritt ist, $v(i)$ der aktuelle Wert für die Rückzugsgeschwindigkeit im i-ten Schritt ist,

$a_s$ die Axialbeschleunigung zum linearen Abbremsen der Schnecke ist und

$\Delta t$ die Taktzeit jeden Schrittes ist.

**3.** Verfahren nach Anspruch 2, **dadurch gekennzeichnet, dass** man $\omega(i)$ durch eine vorgegebene Minimaldrehzahl ersetzt, wenn $\omega(i+1)$ kleiner ist als die Mindestdrehzahl.

**4.** Verfahren nach Anspruch 1 bis 3, **dadurch gekennzeichnet, dass** man die Drehzahlverminderung auslöst, wenn die Schnecke den Anfang einer Bremsstrecke $\Delta s$ vor der Dosierposition ($s_E$) erreicht hat, wobei $\Delta s$ gegeben ist durch

$$\Delta s = \frac{1}{2} v_0 \cdot t_B$$

und wobei $v_0$ die Rückzugsgeschwindigkeit der Schnecke bei Erreichen der Bremsstrecke und $t_B$ eine Bremszeit des Systems bezeichnet.

**Claims**

**1.** A method for regulating the metering operation of an injection-moulding machine, wherein the material is plasticized by a rotating screw (4) and transported into a metering chamber (8), wherein a dynamic pressure is built up in the metering chamber (8) which axially displaces the screw (4) into a metering position ($S_E$) with an axial retraction speed ($v_s$), wherein the rotational speed ($\omega$) of the screw is reduced as a function of the axial retraction speed ($v_s$) before reaching the metering position ($S_E$),
**characterized in that**
a rotational speed value of the screw to be adjusted is calculated as a function of a current rotational speed value and a current retraction speed of the screw.

**2.** The method according to Claim 1, **characterized in that** new rotational speed values $\omega(i+1)$ for the screw (4) is iteratively determined from the following relationship:

$$\omega(i+1) \leftarrow \omega(i) - \frac{\omega(i)}{v(i)} a_s \Delta t$$

wherein $\omega(i)$ is the current rotational speed value in the i-th step,

$v(i)$ is the current value for the retraction speed in the i-th step,

$a_s$ is the axial acceleration for the linear braking of the screw and

$\Delta t$ is the cycle time of each step.

**3.** The method according to Claim 2, **characterized in that** $\omega(i)$ is replaced with a predetermined minimum rotational speed if $\omega(i+1)$ is smaller than the minimum rotational speed.

**4.** The method according to Claim 1 to 3, **characterized in that** the rotational speed reduction is triggered when the screw has reached the start of a braking section $\Delta s$ in front of the metering position ($S_E$), wherein $\Delta s$ is given by

$$\Delta s = \frac{1}{2} v_0 \cdot t_B$$

and wherein $V_0$ designates the retraction speed of the screw on reaching the braking section and $t_B$ a braking time of the system.

**Revendications**

1. Procédé pour réguler le processus de dosage d'une machine de moulage par injection dans laquelle un matériau est plastifié par une vis sans fin rotative (4) et acheminé dans un espace de dosage (8), sachant que dans l'espace de dosage (8), une pression dynamique se crée qui pousse la vis sans fin (4) axialement sur une position de dosage ($S_E$) avec une vitesse de retour axiale ($V_S$), sachant que le nombre de tours ($\omega$) de la vis sans fin se réduit avant d'atteindre la position de dosage ($S_E$) en fonction de la vitesse de retour axiale ($V_S$),
**caractérisé en ce que**
l'on calcule une nouvelle valeur de nombre de tours à régler de la vis sans fin en fonction d'une valeur de nombre de tours actuelle et d'une vitesse de retour actuelle de la vis sans fin.

2. Procédé selon la revendication 1, **caractérisé en ce que** l'on calcule par itération de nouvelles valeurs de nombre de tours $\omega(i+1)$ pour la vis sans fin (4) à partir de la relation suivante :

$$\omega(i+1) \leftarrow \omega(i) - \frac{\omega(i)}{v(i)} a_s \Delta t$$

dans laquelle $\omega(i)$ est la valeur de nombre de tours actuelle en pas i,
v(i) est la valeur actuelle dz la vitesse de retour en pas i, $a_S$ est l'accélération axiale pour le freinage linéaire de la vis sans fin et
$\Delta t$ est le temps de cycle de chaque pas.

3. Procédé selon la revendication 2, **caractérisé en ce que** l'on remplace $\omega(i)$ par un nombre de tours minimal prédéfini lorsque $\omega(i+1)$ est inférieur au nombre de tours minimal.

4. Procédé selon l'une des revendications 1 à 3, **caractérisé en ce que** l'on déclenche la réduction du nombre de tours lorsque la vis sans fin a atteint le début d'un trajet de freinage $\Delta_S$ avant la position de dosage ($S_E$), sachant que $\Delta_S$ est donné par

$$\Delta s = \frac{1}{2} v_0 \cdot t_B$$

et sachant que $V_0$ désigne la vitesse de retour de la vis sans fin lorsque le trajet de freinage est atteint et $t_B$ désigne un temps de freinage du système.

**Fig. 1**

**Fig. 2**

**IN DER BESCHREIBUNG AUFGEFÜHRTE DOKUMENTE**

**In der Beschreibung aufgeführte Patentdokumente**

- JP 63095927 B
- DE 19619730 A1

- EP 0245522 A1